# DEMANDE DE BREVET EUROPEEN

(11) **EP 0 556 104 A1**
(43) Date de publication de la demande: **18.08.1993**
(21) Numéro de dépôt: 93400306.2
(22) Date de dépôt: 08.02.1993
(51) Int. Cl.: G01L 5/04, B66C 15/00

(54) **Indicateur de surcharge**

(30) Priorité: 11.02.1992 FR 9201720
(71) Demandeur: FORGE FRANCE, F-77530 Vaux le Pénil (FR)
(72) Inventeur: FORGE FRANCE, F-77530 Vaux le Pénil (FR)
(74) Mandataire: Ramey, Daniel

(57) **Abrégé**

Dispositif pour indiquer si un élément de liaison tel qu'une élingue, une chaîne ou une sangle est soumis à une surcharge.

Ce dispositif comprend deux pièces (1 et 2) pouvant être attelées l'une a l'élément de liaison et l'autre à un élément, par exemple à un crochet, auquel l'une des extrémités de l'élément de liaison doit être fixée. L'une des pièces est solidaire d'une cavité (1a) dans laquelle peut coulisser un embout (2a) solidaire de l'autre pièce et qui est fermée par un couvercle (5) traversé par ledit embout. Une bague (9) en élastomère ou de faible résistance mécanique est interposée entre le couvercle (5) et deux bagues extérieurement différentes (7 et 8) fixées à l'extrémité de l'embout (2a) . La paroi extérieure de la cavité (1a) présente une ouverture (10) permettant de voir celle des bagues (7 ou 8) qui se trouve au niveau de cette ouverture.

## Description

La présente invention a pour objet un dispositif pour indiquer si un élément de liaison tel qu'une élingue, une chaîne ou une sangle est soumise à une surcharge.

Ce dispositif est caractérisé en ce qu'il comprend deux pièces pouvant être attelées l'une à l'élément de liaison et l'autre à un élément, par exemple à un crochet, auquel l'une des extrémités de l'élément de liaison doit être fixée, en ce que l'une des pièces est solidaire d'une cavité dans laquelle peut coulisser un embout solidaire de l'autre pièce et qui est fermée par un couvercle traversé par ledit embout, en ce qu'une bague en élastomère ou de faible résistance mécanique est interposée entre le couvercle et deux bagues extérieurement différentes fixées à l'extrémité de l'embout, et en ce que la paroi extérieure de la cavité présente une ouverture permettant de voir celle des bagues qui se trouve au niveau de cette ouverture.

On a décrit ci-après, à titre d'exemple non limitatif, un mode de réalisation de l'indicateur de surcharge selon l'invention, avec référence au dessin annexé dans lequel :

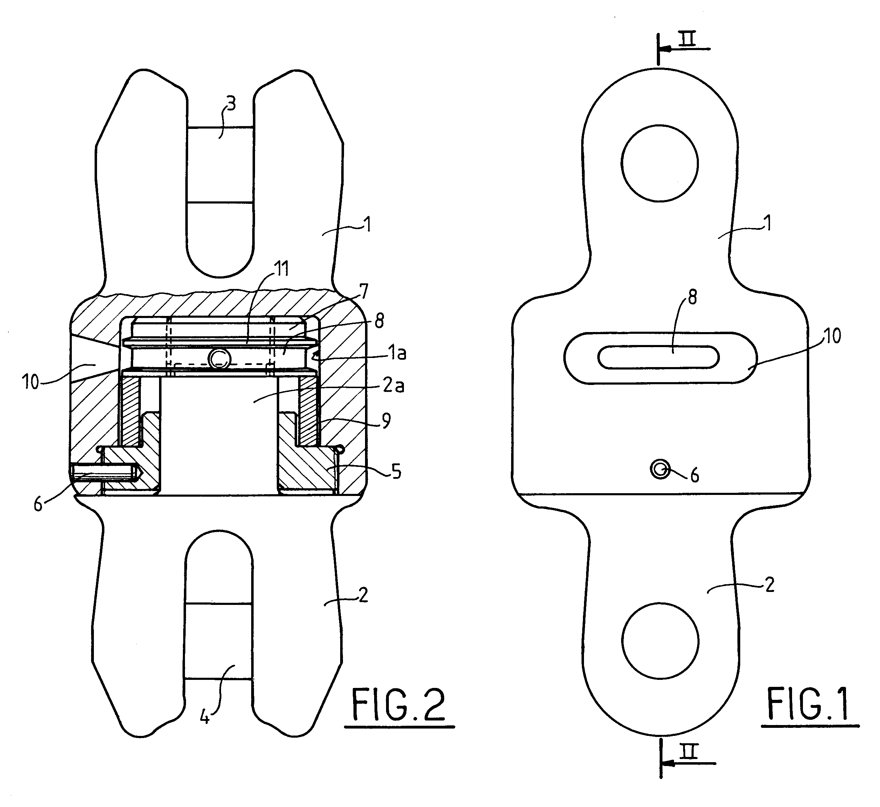

La Figure 1 est une vue en élévation du dispositif;
La Figure 2 en est une coupe suivant II-II de la Figure 1.

Tel qu'il est représenté au dessin, l'indicateur de surcharge selon l'invention comprend deux pièces 1 et 2 pouvant être reliées par des axes 3 et 4, par exemple à une élingue et à un crochet.

La pièce 1 comporte une cavité cylindrique axiale 1a qui est fermée par une bague 5 immobilisée par une clavette 6.

De son côté, la pièce 2 comporte un embout axial 2a qui traverse la bague 5. Deux bagues, l'une rouge 7 et l'autre verte 8 sont vissées sur l'extrémité de l'embout 2a qui est filetée.

Un anneau en élastomère 9 est interposé entre la bague 5 et la bague verte 8. Une ouverture 10 ménagée à une faible distance du fond de la cavité 1a permet de voir la couleur de la bague 7 ou 8 qui se trouve en regard.

En temps normal, la bague verte 8 se trouve en regard de l'ouverture 10. La bague en élastomère 9 est déterminée de façon que, lorsque la charge atteint la valeur voulue à ne pas dépasser, cette bague est suffisamment comprimée pour que la bague rouge 7 se trouve en regard de l'ouverture 10. Dans la pratique les bagues 7 et 8 sont sont constituées par deux anneaux qui sont engagées dans deux gorges prévues sur une même bague 11 vissée sur l'extrémité filetée de l'embout 2a et prenant appui sur la bague 9.

Le dispositif qui vient d'être décrit est réversible; si la surcharge disparait, la bague 9 se détend et ramène les bagues 7 et 8 dans leur position initiale de sorte que la bague verte 8 se trouve de nouveau en regard de l'ouverture 10. Mais la bague 9 pourrait être en une matière ayant une faible résistance mécanique de façon à se rompre ou à se déformer de manière permanente en cas de surcharge; dans ce cas, la dispositif est irréversible, la bague rouge 7 restant en regard de l'ouverture 10 après une surcharge, même si celle-ci disparait.

## Revendications

1. Dispositif pour indiquer si un élément de liaison tel qu'une élingue, une chaîne ou une sangle est soumis à une surcharge,
caractérisé en ce qu'il comprend deux pièces (1 et 2) pouvant être attelées l'une à l'élément de liaison et l'autre à un élément, par exemple à un crochet, auquel l'une des extrémités de l'élément de liaison doit être fixée, en ce que l'une des pièces est solidaire d'une cavité (1a) dans laquelle peut coulisser un embout (2a) solidaire de l'autre pièce et qui est fermée par un couvercle (5) traversé par ledit embout, en ce qu'une bague (9) en élastomère ou de faible résistance mécanique est interposée entre le couvercle (5) et deux bagues extérieurement différentes (7 et 8) fixées à l'extrémité de l'embout (2a), et en ce que la paroi extérieure de la cavité (1a) présente une ouverture (10) permettant de voir celle des bagues (7 ou 8) qui se trouve au niveau de cette ouverture.

2. Dispositif selon la revendication 1,
caractérisé en ce que les deux bagues (7 et 8) sont de couleurs différentes.

3. Dispositif selon la revendication 1 ou 2, caractérisé en ce que la cavité (1a) est prévue dans l'axe de la pièce (1) et en ce que l'embout (2a) est disposé dans l'axe de la pièce (2).
